(19) Europäisches Patentamt / European Patent Office / Office européen des brevets

(11) **EP 1 675 325 B1**

(12) **FASCICULE DE BREVET EUROPEEN**

(45) Date de publication et mention
de la délivrance du brevet:
**22.04.2009 Bulletin 2009/17**

(51) Int Cl.:
*H04L 12/56* (2006.01)     *H04W 72/10* (2009.01)

(21) Numéro de dépôt: **05290435.6**

(22) Date de dépôt: **25.02.2005**

(54) **Procédé de répartition de la ressource radio entre différentes classes mobiles.**

Verfahren zur Funkmittelverteilung zwischen verschiedenen Mobilklassen

Method for radio resource allocation between various mobile classes

(84) Etats contractants désignés:
**AT BE BG CH CY CZ DE DK EE ES FI FR GB GR HU IE IS IT LI LT LU MC NL PL PT RO SE SI SK TR**

(30) Priorité: **26.12.2004 FR 0401930**

(43) Date de publication de la demande:
**28.06.2006 Bulletin 2006/26**

(73) Titulaire: **Bouygues Telecom**
**92100 Boulogne Billancourt (FR)**

(72) Inventeurs:
- **Lemoine, Vincent**
  **75009 Paris (FR)**
- **Terrom, André**
  **78124 Mareil-Sur-Mauldre (FR)**

(74) Mandataire: **Texier, Christian et al**
**Cabinet Régimbeau**
**20, rue de Chazelles**
**75847 Paris Cedex 17 (FR)**

(56) Documents cités:
**WO-A-02/052875**     **US-A1- 2003 125 034**

- **DZIONG Z ET AL: "ADAPTIVE TRAFFIC ADMISSION FOR INTEGRATED SERVICES IN CDMA WIRELESS-ACCESS NETWORKS" IEEE JOURNAL ON SELECTED AREAS IN COMMUNICATIONS, IEEE INC. NEW YORK, US, vol. 14, no. 9, 1 décembre 1996 (1996-12-01), pages 1737-1747, XP000639636 ISSN: 0733-8716**
- **MALIK S A ET AL: "Resource allocation for multimedia services on the UMTS downlink" ICC 2002. 2002 IEEE INTERNATIONAL CONFERENCE ON COMMUNICATIONS. CONFERENCE PROCEEDINGS. NEW YORK, NY, APRIL 28 - MAY 2, 2002, IEEE INTERNATIONAL CONFERENCE ON COMMUNICATIONS, NEW YORK, NY : IEEE, US, vol. VOL. 1 OF 5, 28 avril 2002 (2002-04-28), pages 3076-3080, XP010590042 ISBN: 0-7803-7400-2**

**Description**

L'invention concerne la répartition de la ressource radio dans un système de télécommunication cellulaire comprenant différentes classes d'usagers.

Le système de télécommunication est plus spécifiquement un système de télécommunication de troisième génération permettant de proposer aux usagers, partout et à tout moment, des services multimédias avec des qualités de services différentes (débit, taux d'erreurs, délais de transfert...) selon les différents types de médias (voix, audio, données...).

L'invention concerne plus particulièrement un mécanisme de répartition de la ressource radio dans un réseau à noyau UMTS (Système de Télécommunication Mobile Universel ou, selon la terminologie anglo-saxonne, Universal Mobile Telecommunication System).

Allouer la ressource radio à l'ensemble des usagers consiste à partager la puissance totale et le nombre de codes disponibles sur l'ensemble des cellules d'un site particulier de telle sorte que chaque mobile (terminal de téléphonie mobile d'usager) dispose d'un couple code/puissance.

L'allocation se doit d'être efficace afin que la qualité de service offerte aux usagers soit la meilleure possible, et cela quelque soit la densité de trafic et le type de service demandé.

Les mobiles sont généralement regroupés par classe, un rang de priorité déterminant la préséance dans l'attribution de la ressource radio étant associé à chacune des classes.

Afin d'assurer une qualité de service qui soit la plus optimale possible, les ressources sont effectivement traditionnellement allouées aux mobiles en fonction du rang de priorité associé à la classe à laquelle ils appartiennent.

Une telle priorité peut être fixée, par exemple, en fonction de la sensibilité aux délais d'acheminement de l'information.

A titre d'exemple, les mobiles demandant des services temps réel (mobiles RT selon l'expression anglo-saxonne Real Time) sont traditionnellement considérés comme prioritaires alors que les mobiles demandant des services non temps réel (mobiles NRT selon l'expression anglo-saxonne Non Real Time) sont considérés comme non prioritaires et ne sont servis que dans un second temps.

En d'autres termes, les ressources disponibles pour des mobiles moins prioritaires peuvent être préemptées par des mobiles plus prioritaires.

Dans le cadre d'une telle stratégie d'allocation de la ressource radio, il arrive qu'une fois l'ensemble des mobiles plus prioritaires servis, il ne reste pas assez de ressources (en puissance et/ou en code) pour pouvoir servir les mobiles moins prioritaires.

La réduction des ressources disponibles pour les mobiles moins prioritaires peut ainsi conduire à un niveau de service pour ces mobiles jugé inacceptable

Afin de s'assurer que les mobiles moins prioritaires disposent tout de même d'un minimum de ressources et donc d'une qualité de service acceptable, il est classiquement connu d'attribuer une partie des ressources disponibles exclusivement auxdits mobiles moins prioritaires.

Cette attribution de ressources est réalisée dans l'art antérieur (dont la Demanderesse n'a toutefois pas connaissance d'une publication officielle) en utilisant des seuils définissant de manière figée quelle proportion des ressources est à réserver exclusivement aux mobiles moins prioritaires.

La réservation de ressources radio aux différentes classes de mobiles est ainsi statique puisqu'elle ne tient pas compte de la nature évolutive du trafic.

Or, de tels seuils figés peuvent être inadaptés à certaines conditions de trafic, ou conduire à une réservation excessive de ressources pour les mobiles moins prioritaires dans les cas où l'on a des exigences fortes en terme de qualité de service pour lesdits mobiles moins prioritaires.

Il apparaît ainsi nécessaire de disposer d'une allocation de la ressource radio entre les différents usagers qui soit plus efficace en terme de qualité de service et qui tienne par conséquent compte de l'évolution du trafic.

Les ressources allouées aux différentes classes de mobiles doivent ainsi pouvoir être adaptées dynamiquement selon l'état effectif de leur débit.

On connaît du document US 2003/0125034 une gestion dynamique de la bande passante permettant d'assurer la qualité du service pour les mobiles les plus prioritaires dans des conditions de surcharge.

Un but de l'invention est de proposer une telle gestion dynamique du plan de répartition des ressources.

A cet effet, l'invention propose un procédé de répartition de la ressource radio dans un système de télécommunication cellulaire comprenant différentes classes de mobiles, la ressource radio consistant en une puissance totale et un ensemble de codes disponibles, chacune des classes de mobiles disposant d'un rang de priorité déterminant sa préséance dans l'attribution de la ressource radio, une puissance fraction de la puissance totale et un nombre de codes parmi l'ensemble de codes étant à chaque instant attribués à chacune desdites classes, mais pouvant être préemptés si besoin par les mobiles d'une ou plusieurs classes de rang de priorité supérieur, ledit procédé étant caractérisé en ce que, à des instants d'analyse donnés, pour chacune desdites classes de mobiles, à l'exception de la classe la plus prioritaire, on évalue les besoins des mobiles de ladite classe et on compare lesdits besoins au niveau de service réels offert audit instant d'analyse par ladite puissance et ledit nombre de codes attribués auxdits mobiles de ladite classe, et, lorsque lesdits besoins sont supérieurs audit niveau de service, on bloque la préemption de ladite puissance et dudit nombre de codes attribués auxdits mobiles de ladite classe par des mobiles d'une ou plusieurs classes plus prioritaires.

On dispose de telle sorte d'une stratégie efficace de répartition de la ressource radio entre les différentes classes de mobiles, en fonction de leur priorité. Cette stratégie de répartition permet en particulier d'éviter le risque d'une congestion des services supportés par les classes moins prioritaires ou celui d'une réservation éventuellement inutile de ressource pour ces mêmes classes. La répartition proposée est effectivement une répartition dynamique prenant en compte le besoin des mobiles moins prioritaires.

D'autres caractéristiques, buts et avantages de l'invention apparaîtront à la lecture de la description détaillée qui va suivre d'un mode de réalisation possible de l'invention.

Comme cela a déjà été mentionné précédemment, la ressource radio attribuée (c'est-à-dire une puissance fraction de la puissance totale et un nombre de codes parmi l'ensemble de codes disponibles), selon un plan de répartition de la ressource établi à un instant donné, à des mobiles moins prioritaires peut traditionnellement être préemptée par des mobiles plus prioritaires.

L'invention propose de bloquer, dans une certaine mesure, la préemption par les mobiles plus prioritaires de la ressource attribuée à un instant donné aux mobiles moins prioritaires, lorsque la réduction de la ressource allouée aux mobiles moins prioritaires conduit en particulier à un niveau de service pour ces mobiles jugé inacceptable.

Dans le cadre de la description ci-après, on ne considère que deux classes de mobiles, chacune de ses classes disposant d'un rang de priorité déterminant sa préséance dans l'attribution de la ressource radio.

On comprendra cependant que l'invention n'est en aucun cas limitée par le nombre de classes de mobiles, c'est-à-dire par le nombre de rangs de priorité. L'invention est en effet applicable à un nombre quelconque de rangs de priorité, les mobiles d'une classe disposant d'un rang de priorité donné préemptant les ressources attribuées à l'ensemble des mobiles des classes disposant d'un rang de priorité inférieur.

Revenant à la description de l'invention et au cas de deux classes de mobiles, une mémoire tampon est associée à chaque mobile non prioritaire.

Ladite mémoire tampon « écoule» des entités de trafic à destination du mobile qui lui est associé avec un certain débit qui peut varier dans le temps. Ladite mémoire tampon contient ainsi, à un instant donné, les entités de trafic qui doivent être transmises vers ledit mobile.

Le plan de répartition des ressources doit pouvoir être adapté en fonction des besoins réels, à un instant donné, des mobiles moins prioritaires.

L'invention propose d'évaluer ces besoins réels, à des instants d'analyse donnés, en analysant le temps nécessaire au transfert des données stockées dans les mémoires tampon des mobiles de chacune des classes autres que celle de rang le plus élevé, et de comparer ces temps à des seuils définis pour chacune de ces classes.

L'invention permet de la sorte de déterminer s'il y a lieu d'autoriser ou non la préemptabilité des ressources attribuées aux mobiles de ces classes par les mobiles des classes plus prioritaires, ladite autorisation ou non étant considérée jusqu'à l'instant d'analyse suivant.

On notera que les instants d'analyse selon l'invention (pour autoriser ou non la préemption) ne sont pas similaires des instants auxquels le plan de répartition de la ressource radio (pour l'attribution d'une puissance et d'un nombre de codes à chacune des classes) peut être modifié.

Ladite analyse est réalisée classe par classe, en partant de la classe la moins prioritaire pour terminer avec la classe de rang directement inférieur à celle la plus prioritaire.

Dans le cas où l'on ne considère que deux classes, l'une prioritaire, l'autre non prioritaire, cette analyse est ainsi uniquement réalisée pour les mobiles de la classe non prioritaire afin de déterminer si les ressources attribuées à ladite classe non prioritaire peuvent être ou non préemptées par les mobiles de la classe prioritaire.

Afin de réaliser cette adaptation ressource/débit, il est prévu, dans le cadre de l'invention, une évaluation des besoins réels des mobiles moins prioritaires et, en fonction du résultat de cette analyse, un éventuel blocage de la préemption de ces mobiles par les mobiles plus prioritaires.

De manière avantageuse, une telle évaluation est réalisée périodiquement, à des instants $T_i=i*T$, i étant un entier et T la durée entre deux analyses successives.

Ladite évaluation met en oeuvre une succession d'étapes dont l'enchaînement selon un mode de réalisation préféré de l'invention est présenté ci-après.

La description suivante ne concerne par souci de clarté que le cas à deux classes.

Au cours d'une première étape, l'état des mémoires tampons de transmission des entités de trafic associées aux mobiles non prioritaires est analysé.

Au cours d'une seconde étape, le débit moyen pour l'ensemble des mobiles non prioritaires est estimé.

Au cours d'une troisième étape, le temps de vidage des mémoires tampons des mobiles non prioritaires est estimé.

Ledit temps de vidage est ensuite comparé avec un seuil paramétrable, et en fonction du résultat de cette comparaison, la préemption des mobiles non prioritaires par les mobiles prioritaires lors des contrôles d'admission peut être ou non bloquée.

Au cours de la première étape, les états des mémoires tampons de transmission des entités de trafic associées aux mobiles non prioritaires sont analysés. On recense pour cela le nombre d'entités de trafic stockées dans l'ensemble des mémoires tampons associées auxdits mobiles non prioritaires.

On détermine ainsi périodiquement, aux ins-

tants $T_i = i*T$, une quantité $K_i = \sum_{j=1}^{N} L_j$ , où N représente le nombre de mobiles non prioritaires à l'admission connectés à l'instant $T_i$, et $L_j$ représente la taille des mémoires tampon de transmission des entités de trafic associées aux mobiles j non prioritaires à l'admission.

Cette quantité $K_i$ représente ainsi la quantité d'entités de trafic présentes, et donc en attente de transmission, à l'instant $T_i$, dans l'ensemble des mémoires tampons associées aux mobiles non prioritaires.

Au cours de la seconde étape, le débit moyen $DebitIB_i$ écoulé pour les mobiles non prioritaires est estimé.

Ce débit permet d'estimer la capacité de la répartition de ressources courante à écouler un certain trafic pour les mobiles non prioritaires.

Lorsque l'information de débit moyen écoulé par mobile est disponible dans une base de mesure du système, le débit moyen peut être avantageusement calculé à partir de ce débit moyen écoulé pour chacun des mobiles non prioritaires mesuré en moyennant ce débit sur l'ensemble des mobiles non prioritaires et sur la période T précédant l'analyse.

Si l'information de débit moyen écoulé par mobile n'est pas disponible, le débit moyen peut être calculé à partir de la ressource allouée à l'ensemble des mobiles non prioritaires mesurée et moyennée sur la période précédant l'analyse, connaissant cette ressource moyenne et le débit théorique moyen par unité de ressource, le débit moyen peut être déduit.

Connaissant la quantité $K_i$ d'entités de trafic en attente de transmission vers les mobiles non prioritaires, ainsi que le débit moyen $DebitIB_i$ alloué auxdits mobiles non prioritaires, il est alors possible, au cours de la troisième étape, d'estimer le temps de vidage $T_{vidage\,i}$ des mémoires tampons des mobiles non prioritaires.

Ce temps de vidage $T_{vidage}$ est défini par la relation : $T_{vidage\,i} = \dfrac{K_i}{DebitIB_i}$ de sorte à représenter le temps nécessaire pour vider, à un débit égal audit débit moyen $DebitIB_i$, les mémoires tampons associées à l'ensemble des mobiles non prioritaires.

De manière schématique, plus ce temps de vidage est faible, plus la ressource attribuée aux mobiles non prioritaires peut être considérée comme réductible au regard des besoins effectifs desdits mobiles non prioritaires. Les mobiles prioritaires peuvent alors venir préempter ladite ressource, sans que cela soit préjudiciable au niveau de service des mobiles non prioritaires.

En revanche, plus ce temps de vidage est important, plus il apparaît justifier que la ressource attribuée aux mobiles non prioritaires leur soit maintenue. Les mobiles prioritaires ne peuvent venir préempter ladite ressource, sans que cela soit préjudiciable au niveau de service des mobiles non prioritaires.

Pratiquement, on compare le temps de vidage $T_{vidage\,i}$ avec un seuil d'acceptabilité $T_v$ avantageusement paramétrable par classe de mobile.

Lorsque le temps de vidage $T_{vidage\,i}$ des mémoires tampon calculé précédemment est supérieur audit seuil $T_v$, le mécanisme de préemption des mobiles non prioritaires à l'admission par les mobiles plus prioritaires est bloqué.

La ressource attribuée aux mobiles non prioritaires est alors maintenue en empêchant toute préemption de ladite ressources attribuée auxdits mobiles non prioritaires par les mobiles prioritaires.

L'admission des mobiles plus prioritaires n'est alors possible que dans la mesure où ils utilisent des ressources non utilisées par les mobiles non prioritaires à l'admission.

Si en revanche, le temps de vidage $T_{vidage\,i}$ est inférieur audit seuil $T_v$, la préemption par les mobiles prioritaires de la ressource attribuée aux mobiles non prioritaires est autorisée.

Le mécanisme ici décrit permet en définitive d'estimer périodiquement les besoins réels des mobiles non prioritaires, et de savoir s'il est nécessaire de forcer, pour la période suivante, le maintien de la ressource qui leur est attribuée.

Finalement, pour chaque mobile prioritaire passant en contrôle d'admission, selon le résultat de l'analyse périodique définie ci-dessus, on peut être amené à refuser le mobile ou encore à utiliser un couple code/puissance de niveau inférieur.

Cela est par exemple le cas lorsque, alors que le seuil $T_v$ est dépassé, on ne pourrait admettre un mobile prioritaire qu'en imposant une préemption de la ressource allouée aux mobiles moins prioritaires, ce qui n'est pas toléré.

La liaison dudit mobile prioritaire peut alors être dégradée en utilisant un couple code/puissance de niveau inférieur de manière à ce qu'il n'y ait pas de préemption de la ressource réservée aux mobiles moins prioritaires.Il s'agit par exemple d'un passage d'un fonctionnement à plein régime à un fonctionnement à demi-régime pour des services voix (soit un passage de « full-rate » en « half-rate » selon la terminologie anglo-saxonne).

Comme cela a déjà été souligné au cours de la description, l'invention s'applique au cas où une multiplicité de rangs de priorité est à considérer.

Comme cela a déjà été indiqué précédemment, l'invention s'applique en particulier, mais non exclusivement, à la répartition de la ressource radio entre différentes familles d'utilisateurs de la ressource radio dans un réseau à noyau UMTS.

**Revendications**

**1.** Procédé de répartition de la ressource radio dans un système de télécommunication cellulaire comprenant différentes classes de mobiles,
la ressource radio consistant en une puissance totale et un ensemble de codes disponibles,
chacune des classes de mobiles disposant d'un rang de priorité déterminant sa préséance dans l'attribution de la ressource radio,
une puissance fraction de la puissance totale et un nombre de codes parmi l'ensemble de codes étant à chaque instant attribués à chacune desdites classes, mais pouvant être préemptés si besoin par les mobiles d'une ou plusieurs classes de rang de priorité supérieur,
ledit procédé étant **caractérisé en ce que**, à des instants d'analyse donnés, pour chacune desdites classes de mobiles, à l'exception de la classe la plus prioritaire,
on évalue les besoins réels des mobiles de ladite classe et on compare lesdits besoins au niveau de service offert audit instant d'analyse par ladite puissance et ledit nombre de codes attribués auxdits mobiles de ladite classe,
et, lorsque lesdits besoins sont supérieurs audit niveau de service, on bloque la préemption de ladite puissance et dudit nombre de codes attribués auxdits mobiles de ladite classe par des mobiles d'une ou plusieurs classes plus prioritaires.

2. Procédé selon la revendication 1, **caractérisé en ce que** l'évaluation, auxdits instants d'analyse donnés $T_i$, des besoins des mobiles d'une classe donnée comporte les étapes consistant à :

   - recenser la quantité $K_i$ d'entités de trafic présentes dans les mémoires tampons de transmission associées aux mobiles de ladite classe donnée ;
   - estimer le débit moyen DebitIB$_i$ de l'ensemble des mobiles de ladite classe donnée;
   - estimer le temps de vidage $T_{\text{vidage }i}$ des mémoires tampons associées aux mobiles de ladite classe donnée ;

3. Procédé selon la revendication 2, **caractérisé en ce que** l'étape de recensement de la quantité d'entités de trafic présentes, à un instant d'analyse $T_i$, dans les mémoires tampons associées aux N mobiles d'une classe donnée comporte les opérations de :

   - calcul de la taille $L_j$ de la mémoire tampon associée à chaque mobile j de ladite classe donnée en quantifiant le nombre d'entités de trafic qui y sont stockées audit instant $T_i$;
   - calcul de la quantité $K_i$ d'entités de trafic présentes dans les mémoires tampons associées à l'ensemble des N mobiles de ladite classe donnée, selon $K_i = \sum\limits_{j=1}^{N} L_j$ .

4. Procédé selon la revendication 3, **caractérisé en ce que** le débit écoulé par mobile est mesuré pour chaque mobile et **en ce que** le débit moyen DebitIB$_i$ de l'ensemble des mobiles de ladite classe donnée est calculé en moyennant les débits effectivement écoulés par l'ensemble des mobiles de ladite classe donnée depuis l'instant d'analyse $T_{i-1}$ précédent directement ledit instant $T_i$.

5. Procédé selon la revendication 3, **caractérisé en ce que** le débit écoulé par mobile n'est pas mesuré pour chaque mobile et **en ce que** le débit moyen DebitIB$_i$ de l'ensemble des mobiles de ladite classe donnée est estimé à partir, d'une part, de la ressource allouée à l'ensemble des mobiles de ladite classe donnée depuis l'instant d'analyse $T_{i-1}$ précédent directement ledit instant $T_i$, et d'autre part du débit moyen théorique par unité de ressource.

6. Procédé selon l'une des revendications 4 ou 5, **caractérisé en ce que** l'estimation du temps de vidage $T_{\text{vidage }i}$ des mémoires tampons des mobiles d'une classe données est calculé selon

$$T_{\text{vidage }i} = \frac{K_i}{\text{DebitIB}_i} .$$

7. Procédé selon l'une des revendications 2 à 6, **caractérisé en ce que** la comparaison desdits besoins audit niveau de service est réalisé en comparant ledit temps de vidage $T_{\text{vidage }i}$ avec un seuil d'acceptabilité $T_v$.

8. Procédé selon la revendication 7, **caractérisé en ce que** suite à la comparaison du temps de vidage $T_{\text{vidage }i}$ audit seuil d'acceptabilité $T_v$,

   - si ledit temps de vidage $T_{\text{vidage }i}$ est supérieur audit seuil d'acceptabilité $T_v$, la préemption de la ressource attribuée aux mobiles de ladite classe donnée par des mobiles plus prioritaires est bloquée jusqu'à l'instant d'analyse $T_{i+1}$ suivant ledit instant $T_i$;
   - et si ledit temps de vidage $T_{\text{vidage }j}$ est inférieur audit seuil d'acceptabilité $T_v$. la préemption de la ressource attribuée aux mobiles de ladite classe donnée par des mobiles plus prioritaires est autorisée jusqu'à l'instant d'analyse $T_{i+1}$ suivant ledit instant $T_i$.

9. Procédé selon l'une des revendications précédentes, **caractérisé en ce qu'**il est mis en oeuvre périodiquement, selon une périodicité T, aux instants $T_i=i*T$.

10. Procédé selon l'une des revendications précédentes, **caractérisé en ce qu'**il est appliqué à l'ensemble des mobiles connectés dans un système de télécommunication cellulaire de troisième génération, notamment dans un réseau à coeur UMTS.

**Claims**

1. A method for radio resource allocation in a cellular telecommunications system including various mobile classes,
   the radio resource consisting of a total power and a set of available codes,
   each of the mobile classes having a priority rank determining its precedence in the allocation of the radio resource,
   a power which is a fraction of the total power and a number of codes among the set of codes being allocated at each moment to each of said classes, but which can be preempted if needed by the mobiles of one or several classes with higher priority rank(s),
   said method being **characterized in that**, at given analysis moments, for each of said.mobile classes, with the exception of the highest-priority class,
   one assesses the actual needs of the mobiles of said class and compares said needs to the service level offered at said analysis moment by said power and said number of codes allocated to the mobiles of said class,
   and, when said needs are greater than said service level, one blocks the preemption of said power and said number of codes allocated to said mobiles of said class by mobiles from one or several higher-priority classes.

2. The method according to claim 1, **characterized in that** the assessment, at said given analysis moments $T_i$ of the needs of the mobiles of a given class includes the steps of:

   - taking an inventory of the quantity $K_i$ of traffic entities present in the transmission buffer memories related to the mobiles of said given class;
   - estimating the average throughput $DebitIB_i$ of the set of mobiles of said given class;
   - estimating the emptying time $T_{Vidage\ i}$ of the buffer memories associated with the mobiles of said given class.

3. The method according to claim 2, **characterized in that** the step for inventorying the quantity of traffic entities present, at an analysis moment $T_i$, in the buffer memories associated with the N mobiles of a given class, includes the operations of:

   - calculating the size $L_j$ of the buffer memory associated with each mobile j of said given class while quantifying the number of traffic entities which are stored there at said moment $T_i$;
   - calculating the quantity $K_i$ of traffic entities present in the buffer memories associated with all of the N mobiles of said given class, according to $$K_i = \sum_{j=1}^{N} L_j .$$

4. The method according to claim 3, **characterized in that** the throughput carried per mobile is measured for each mobile and **in that** the average throughput $DebitIB_i$ of the set of mobiles of said given class is calculated by averaging the throughputs effectively carried by the set of mobiles of said given class from the analysis moment $T_{i-1}$ directly preceding said moment $T_i$.

5. The method according to claim 3, **characterized in that** the throughput carried per mobile is not measured for each mobile and **in that** the average throughput $DebitIB_i$ of the set of mobiles of said given class is estimated from, on one hand, the resource allocated to the set of mobile of said given class from the analysis moment $T_{i-1}$ directly preceding said moment $T_i$, and on the other hand the theoretical average throughput per resource unit.

6. The method according to one of claims 4 or 5, **characterized in that** the estimate of the emptying time $T_{vidage\ i}$ of the buffer memories of the mobiles of a given class is calculated according to:

   $$T_{vidage\ i} = \frac{K_i}{DebitIB_i} .$$

7. The method according to one of claims 2 to 6, **characterized in that** the comparison of said needs to said service level is done by comparing said emptying time $T_{vidage\ i}$ with an acceptability threshold $T_v$.

8. The method according to claim 7, **characterized in that** following the comparison of the emptying time $T_{vidage\ i}$ to the acceptability threshold $T_v$,

   - if said emptying time $T_{vidage\ i}$ is greater than said acceptability threshold $T_v$, the preemption of the resource allocated to the mobiles of said given class by higher priority mobiles is blocked until the analysis moment $T_{i+1}$ following the moment $T_i$;
   - and if said emptying time $T_{vidage\ i}$ is less than said acceptability threshold $T_v$, the preemption of the resource allocated to the mobiles of said given class by higher priority mobiles is allowed until the analysis moment $T_{i+1}$ following said moment $T_i$.

9. The method according to one of the preceding claims, **characterized in that** it is implemented periodically, according to a periodicity T, at the moments $T_i=i*T$.

10. The method according to one of the preceding claims, **characterized in that** it is applied to all of the mobiles connected in a third-generation cellular telecommunications system, in particular in a UMTS core network.

**Patentansprüche**

1. Verfahren zur Verteilung der Funkmittel in einem zellularen Telekommunikationssystem, das verschiedene Mobilklassen aufweist,
wobei die Funkmittel aus einer Gesamtleistung und einer Gruppe von verfügbaren Codes bestehen,
wobei jede Mobilklasse über einen Prioritätsrang verfügt, der ihren Vorrang bei der Zuteilung der Funkmittel festlegt,
wobei jeder Klasse zu jedem Zeitpunkt ein Leistungsanteil an der Gesamtleistung und eine Anzahl von Codes aus der Gruppe der Codes zugeteilt sind, die aber, falls notwendig, von den Mobiltelefonen einer oder mehrerer Klassen höherer Priorität vorbelegt werden können;
wobei das Verfahren **dadurch gekennzeichnet ist, daß** zu gegebenen Analysezeitpunkten für jede der Mobilklassen, ausgenommen die Klasse mit der höchsten Priorität,
der tatsächliche Bedarf der Mobiltelefone der Klasse geprüft wird und dieser Bedarf verglichen wird mit dem Dienstpegel, der zu dem Analysezeitpunkt von der Leistung und der Anzahl von Codes, die den Mobiltelefonen der Klasse zugeteilt sind, bereitgestellt wird,
oder, falls der Bedarf höher ist als der Dienstpegel, man die Vorbelegung der den Mobiltelefonen der Klasse zugeteilten Leistung und Anzahl von Codes durch Mobiltelefone einer oder mehrerer Klassen höherer Priorität sperrt.

2. Verfahren nach Anspruch 1, **dadurch gekennzeichnet, daß** die zu den gegebenen Analysezeitpunkten $T_i$ durchgeführte Prüfung des Bedarfs der Mobiltelefone einer gegebenen Klasse die folgenden Schritte aufweist:

- Zählen der Menge $K_i$ der Verkehrseinheiten, die in den für die Mobiltelefone der gegebenen Klasse vorgesehenen Sendepufferspeichern vorhanden sind;
- Schätzen der mittleren Datenrate DebitIBi der Gesamtheit der Mobiltelefone der gegebenen Klasse;
- schätzen der Zeit $T_{vidage,\,i}$ zum Leeren der für die Mobiltelefone der gegebenen Klasse vorgesehenen Pufferspeicher.

3. Verfahren nach Anspruch 2, **dadurch gekennzeichnet, daß** der Schritt des Zählens der Menge der Verkehrseinheiten, die zu einem Analysezeitpunkt $T_i$ in den für die N Mobiltelefone einer gegebenen Klasse vorgesehenen Pufferspeichern vorhanden sind, die Schritte aufweist:

- Berechnung der Größe $L_j$ des für jedes Mobiltelefon j der gegebenen Klasse vorgesehenen Pufferspeichers durch quantitative Ermittlung der Anzahl von Verkehrseinheiten, die zu dem Zeitpunkt $T_i$ dort gespeichert sind;
- Berechnung der Menge Ki der Verkehrseinheiten, die in den jeweiligen Pufferspeichern aller N Mobiltelefone der gegebenen Klasse vorhanden sind, gemäß

$$K_i = \sum_{j=1}^{N} L_j$$

4. Verfahren nach Anspruch 3, **dadurch gekennzeichnet, daß** für jedes Mobiltelefon die pro Mobiltelefon abfließende Datenrate gemessen wird, und **dadurch**, daß die mittlere Datenrate DebitIBi der Gesamtheit der Mobiltelefone der gegebenen Klasse berechnet wird, indem über die Datenraten, die pro Gesamtheit der Mobiltelefone der gegebenen Klasse seit dem Analysezeitpunkt $T_{i-1}$, der dem Zeitpunkt $T_i$ direkt vorangeht, tatsächlich abgeflossen sind, gemittelt wird.

5. Verfahren nach Anspruch 3, **dadurch gekennzeichnet, daß** die pro Mobiltelefon abfließende Datenrate nicht für jedes Mobiltelefon gemessen wird, und **dadurch**, daß die mittlere Datenrate DebitIBi der Gesamtheit der Mobiltelefone der gegebenen Klasse geschätzt wird und zwar ausgehend einerseits von den Funkmitteln, die der Gesamtheit der Mobiltelefone der gegebenen Klasse seit dem Analysezeitpunkt $T_{i-1}$, der dem Zeitpunkt $T_i$ direkt vorangeht, zugeteilt worden sind, und andererseits von der theoretischen mittleren Datenrate pro Funkmitteleinheit.

6. Verfahren nach einem der Ansprüche 4 oder 5, **dadurch gekennzeichnet, daß** die Schätzung der Zeit $T_{vidage,\,i}$ zum Leeren der Pufferspeicher der Mobiltelefone einer gegebenen Klasse wie folgt berechnet wird:

$$T_{vidage,i} = \frac{K_i}{DebitIB_i}$$

7. Verfahren nach einem der Ansprüche 2 bis 6, **dadurch gekennzeichnet, daß** der Vergleich des Bedarfs mit dem Dienstpegel durch Vergleichen der Leerungszeit $T_{vidage,\,i}$ mit einer Akzeptanzschwelle $T_v$ erfolgt.

8. Verfahren nach Anspruch 7, **dadurch gekennzeichnet, daß** im Anschluß an den Vergleich der Leerungszeit $T_{vidage,\,i}$ mit der Akzeptanzschwelle $T_v$ für den Fall, daß die Leerungszeit $T_{vidage,\,i}$ die Akzeptanzschwelle $T_v$ überschreitet, die Vorbelegung der den Mobiltelefonen der gegebenen Klasse zugeteilten Funkmitteln durch die Mobiltelefone höherer Priorität bis zu dem Analysezeitpunkt $T_{i+1}$, der dem Zeitpunkt $T_i$ folgt, gesperrt wird;

    - und für den Fall, daß die Leerungszeit $T_{vidage,\,i}$ die Akzeptanzschwelle $T_v$ unterschreitet, die Vorbelegung der den Mobiltelefonen der gegebenen Klasse zugeteilten Funkmitteln durch die Mobiltelefone höherer Priorität bis zu dem Analysezeitpunkt $T_{i+1}$, der dem Zeitpunkt $T_i$ folgt, erlaubt wird.

9. Verfahren nach einem der vorstehenden Ansprüche, **dadurch gekennzeichnet, daß** es periodisch mit einer Periodizität T zu den Zeitpunkten $T_i{=}i{*}T$ durchgeführt wird.

10. Verfahren nach einem der vorstehenden Ansprüche, **dadurch gekennzeichnet, daß** es auf alle Mobiltelefone, die in einem zellularen Telekommunikationssystem der dritten Generation, insbesondere in einem Netz mit UMTS-Kern, zusammengeschaltet sind, angewendet wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030125034 A